# EUROPÄISCHE PATENTSCHRIFT

(11) **EP 1 371 144 B1**
(45) Veröffentlichungstag und Bekanntmachung des Hinweises auf die Patenterteilung: **18.05.2005**
(21) Anmeldenummer: 02737751.4
(22) Anmeldetag: 21.03.2002
(51) Int. Cl.: H04B 1/38

(54) **SCHALTUNGSANORDNUNG ZUM KOMPENSIEREN DER DÄMPFUNG IN EINEM ANTENNENZULEITUNGSKABEL FÜR EIN MOBILFUNKGERÄT**
CIRCUIT ARRANGEMENT FOR COMPENSATION OF THE DAMPING IN AN ANTENNA FEED CABLE FOR A MOBILE RADIO DEVICE
CIRCUIT DESTINE A COMPENSER L'AFFAIBLISSEMENT DANS UN CABLE D'ALIMENTATION D'ANTENNE POUR UN APPAREIL RADIOMOBILE

(30) Priorität: 21.03.2001 DE 10114532
(43) Veröffentlichungstag der Anmeldung: 17.12.2003
(73) Patentinhaber: Funkwerk Dabendorf GmbH, 15806 Dabendorf (DE)
(72) Erfinder: NAST, Helmut, 12557 Berlin (DE); JACOBI, Raimo, 12557 Berlin (DE)
(74) Vertreter: Schubert, Klemens, Dr.
(86) Internationale Anmeldenummer: PCT/DE2002/001076
(87) Internationale Veröffentlichungsnummer: WO 2002/078202

(56) Entgegenhaltungen:
- EP-A- 1 039 650
- DE-A- 19 536 640
- GB-A- 2 176 079
- US-A- 5 881 369

## Beschreibung

Die Erfindung betrifft eine Schaltungsanordnung zum Kompensieren der Dämpfung in einem Antennenzuleitungskabel für ein Mobilfunkgerät.
Beispielsweise in Kraftfahrzeugen werden Mobilfunkgeräte wegen der abschirmenden Wirkung der Karosserieteile mit einer extern am Fahrzeug angeordneten Antenne betrieben. Hierzu ist das Mobilfunkgerät, beispielsweise ein von einer Freisprecheinrichtung aufgenommenes Mobiltelefon, über ein Antennenzuleitungskabel (HF-Kabel) mit der externen Antenne verbunden. Auch wenn der Empfang und die Möglichkeiten des Sendens durch die Verwendung der externen Antenne deutlich gegenüber einem Betrieb ohne externe Antenne verbessert werden, ist es als nachteilig anzusehen, dass die Sende- und Empfangssignale in dem Antennenzuleitungskabel einer Dämpfung unterliegen. Daher wird das Antennenzuleitungskabel entsprechend in der Praxis bekannt gewordener Lösungen über spezielle zwischen dem Mobilfunkgerät und der externen Antenne angeordnete Schaltungsanordnungen zur Kompensation der in dem Antennenzuleitungskabel auftretenden Dämpfung geführt.
Eine solche Schaltungsanordnung wird beispielsweise in der DE 195 36 640 beschrieben. Da im Mobilfunk zur Entkopplung von Sende- und Empfangskanal innerhalb eines Frequenzbandes zum Senden und Empfangen unterschiedliche Frequenzbereiche verwendet werden und im Hinblick auf eine optimale Kompensation der auftretenden Dämpfung, verfügt die in der Schrift dargestellte Schaltungsanordnung über gesonderte Signalzweige für gesendete und empfangene Signale. Je nachdem ob ein HF-Signal empfangen oder vom Mobilfunkgerät ausgesendet wird, erfolgt durch spezielle HF-Umschalter eine Aktivierung des Sende- oder Empfangszweiges, so dass das Signal über einen Leistungs- bzw. Sendeverstärker oder über einen speziellen Empfangsverstärker geführt wird.
Eine weitere Lösung ist durch die DE 199 13 064, welche der nächstliegenden Stand der Technik darstellt, bekannt geworden. Die in dieser Schrift beschriebene Kompensationsschaltung ist für einen dualbandigen Betrieb ausgelegt. Sie verfügt daher eingangs- und ausgangsseitig über Frequenzbandweichen, durch welche die HF-Signale dem für das jeweilige Frequenzband vorgesehenen Schaltungsteil zugeführt werden. Mittels einer speziellen Schaltungsanordnung wird in Abhängigkeit eines von einer Detektionsschaltung erkannten Sendesignals der Sendeverstärker für das jeweilige Frequenzband zugeschaltet und der entsprechende Signalweg aktiviert. In jüngerer Zeit vollziehen sich für künftige Mobilfunksysteme Entwicklungen, bei denen, unter anderem für eine bessere Ausnutzung der Frequenzbänder und zur Nutzung der unterschiedlichen von gegenwärtig existierenden Mobilfunksystemen jeweils bekannten Vorteile, flexiblere Übertragungsverfahren zum Einsatz gelangen. So können beispielsweise, anders als von den GSM-Netzen her bekannt, innerhalb eines Frequenzbandes die für das Senden und Empfangen vorgesehenen Frequenzbereiche wechseln. Außerdem kann möglicherweise die Übertragung bei einer bestehenden Telekommunikationsverbindung wahlweise zeitschlitzgesteuert oder als Continuous-Wave (kontinuierliche Übertragung ohne Einteilung in Zeitschlitze) erfolgen.

Aufgabe der vorliegenden Erfindung ist es daher, eine Schaltungsanordnung zum Kompensieren der Dämpfung in einem Antennenzuleitungskabel zu schaffen, welche im Hinblick auf diese Entwicklungen einen flexibleren Betrieb gestattet und sich automatisch auf den jeweils für eine Telekommunikationsverbindung gewählten Übertragungsmodus einstellt.

Die Aufgabe wird durch eine Schaltungsanordnung mit den Merkmalen des Hauptanspruchs gelöst. Vorteilhafte Ausgestaltungen bzw. Weiterbildungen der erfindungsgemäßen Schaltungsanordnung sind durch die Unteransprüche gegeben.
Die durch die Merkmale des Hauptanspruchs charakterisierte Schaltungsanordnung ist für den Betrieb in einem Funknetz geeignet, bei dem innerhalb eines Frequenzbandes, je nach den Anforderungen des Netzes und der an einer Telekommunikationsverbindung beteiligten Geräte, wahlweise der höhere oder niedrigere von zwei in dem Frequenzband definierten Frequenzbereichen zum Senden und der jeweils andere Frequenzbereich zum Empfangen der Funksignale verwendet wird. Hierfür umfasst die Schaltungsanordnung in einem für den Betrieb in diesem Frequenzband vorgesehenen Schaltungsteil zumindest einen zum Verstärken von auszusendenden HF-Signalen ausgebildeten Signalzweig mit einem breitbandig ausgelegten Leistungsverstärker, einen zum Verstärken von empfangenden HF-Signalen ausgebildeten Signalzweig mit einem breitbandig ausgelegten Empfangsverstärker, zwei eingangs- und ausgangsseitig der beiden Signalzweige dieses Schaltungsteils angeordnete Filter- und Umschalteinheiten mit je einer Frequenzweiche und einem Signalumschalter sowie eine die Signalumschalter ansteuernde Detektions- und Steuereinheit. Sie nimmt, ausgehend von einem nur das Empfangen, nicht jedoch das Senden von HF-Signalen ermöglichenden Grundzustand, automatisch die von dem Mobilfunkgerät vorgegebenen Betriebszustände ein, bei denen das Senden der HF-Signale wahlweise entweder in dem höheren oder dem niedrigeren der beiden in dem Frequenzband gelegenen Frequenzbereiche möglich ist. Dies wird dadurch erreicht, dass empfangene HF-Signale im Grundzustand des zur Übertragung des entsprechenden Frequenzbereichs vorgesehenen Schaltungsteils unabhängig von ihrer Zugehörigkeit zum höheren oder niedrigeren Frequenzbereich des Frequenzbandes immer über den Empfangsverstärker geführt werden. Erst veranlasst durch das Mobilfunkgerät und ein von ihm ausgesendetes HF-Sendesignal werden mittels der das Vorhandensein des Sendesignals feststellenden Detektions- und Steuereinheit die Signalschalter so angesteuert, dass die HF-Signale mit einer Frequenz ausschließlich innerhalb des im Rahmen der aktuell aufgebauten Telekommunikationsverbindung für das Senden verwendeten Frequenzbereichs über den Leistungs- bzw. Sendeverstärker geführt werden. Gemäß einer möglichen Ausgestaltungsform der Erfindung setzt die Detektionsund Steuereinheit die Signalumschalter unmittelbar mit dem Ausbleiben eines Sendesignals vom Mobilfunkgerät in den Schaltzustand zurück, welcher dem Grundzustand des Schaltungsteils für das entsprechende Frequenzband entspricht. Hier wäre es grundsätzlich auch denkbar, dass das Zurücksetzen in den Grundzustand erst nach Beendigung der zuvor aufgebauten Telekommunikationsverbindung erfolgt. Allerdings würden hierzu zusätzliche Schaltungseinheiten benötigt, mit denen die Beendigung der Verbindung erkannt wird. Zudem ist aber auch im Hinblick auf die gewünschte Flexibilität mit einer Verwendung für zeitschlitzgesteuerte Verfahren oder Continuous-WaveVerfahren der zuvor beschriebenen Variante, bei welcher jeweils unmittelbar nach dem Ausbleiben von Sendesignalen ein Rücksetzen in den Grundzustand erfolgt, der Vorzug zu geben.
Entsprechend einer besonders vorteilhaften weiteren Ausgestaltung der Schaltungsanordnung ist außerdem zwischen der Detektions- und Steuereinheit sowie dem Leistungsverstärker eine weitere Steuerverbindung vorgesehen. Über diese Steuerverbindung kann der Leistungsverstärker aktiviert oder abgeschaltet werden, so dass seine Aktivierung nur bei Vorhandensein eines Sendesignals (innerhalb des von dem Schaltungsteil verarbeiteten Frequenzbandes) erfolgt. Dies ist im Hinblick auf den hohen Energieverbrauch des Leistungsverstärkers besonders vorteilhaft. Diese Variante ermöglicht es außerdem, entsprechend einer Weiterbildung, die Verstärkung des Leistungsverstärkers mittels der Detektions- und Steuereinheit in Abhängigkeit des gerade für das Senden verwendeten Frequenzbereichs unterschiedlich einzustellen.
Gemäß einer besonders vorteilhaften Ausbildung der Erfindung verfügt die Schaltungsanordnung über weitere, den Betrieb in anderen Frequenzbändern (Dualband- oder Multibandbetrieb) ermöglichende Schaltungsteile mit jeweils einem Sende- sowie einem Empfangszweig und ist so dual- bzw. multibandfähig. Dabei sind die den einzelnen Frequenzbändern zugeordneten Schaltungsteile gegebenenfalls durch Frequenzbandweichen, so genannte Diplexer, HF-mäßig voneinander getrennt.

Die Erfindung soll nachfolgend anhand eines Ausführungsbeispieles näher erläutert werden. Dabei zeigen im Einzelnen:
- Fig. 1.: Eine Ausführung der erfindungsgemäßen Schaltungsanordnung für einen Multibandbetrieb;
- Fig. 2:: Den Schaltungsteil A der Schaltungsanordnung, für das wahlweise Senden in einem höheren oder einem niedrigeren Frequenzbereich innerhalb des von diesem Schaltungsteil übertragenen Frequenzbandes;
- Fig. 3:: Ein Detail des Schaltungsteils A nach Fig. 2 im Grundzustand;
- Fig. 4:: Das Detail des Schaltungsteils A gemäß Fig. 3 in einem Schaltzustand für das Senden im Frequenzbereich a;
- Fig. 5:: Das Detail des Schaltungsteils A gemäß Fig. 3 in einem Schaltzustand für das Senden im Frequenzbereich b.

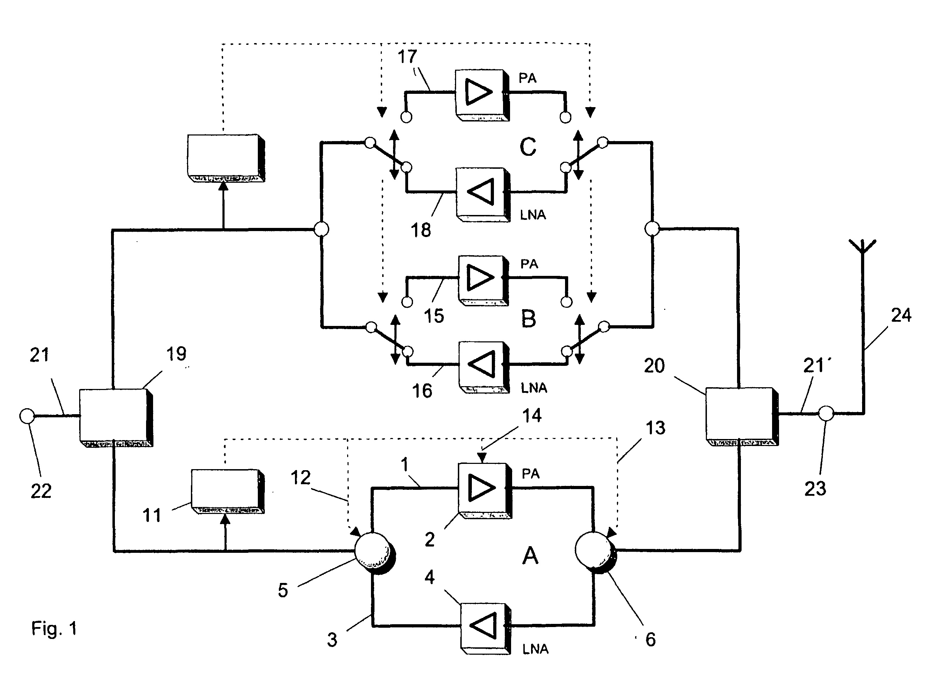

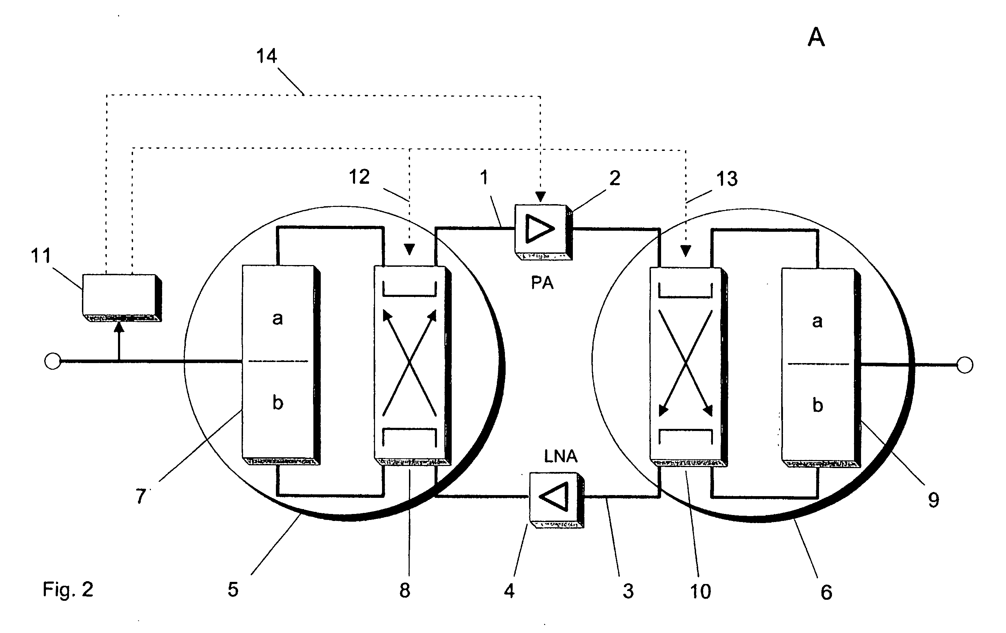

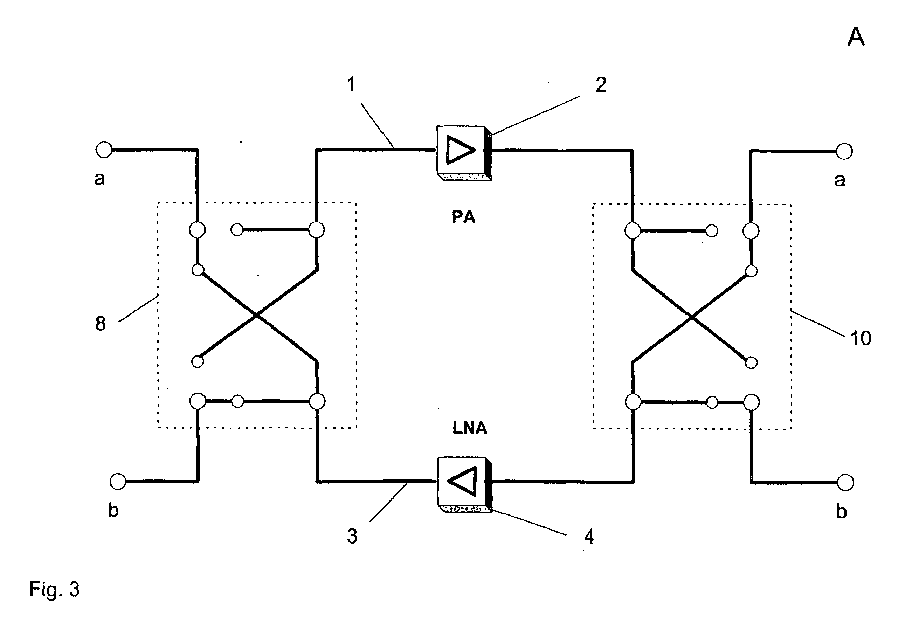

In der Fig. 1 ist die erfindungsgemäße Schaltungsanordnung in einer multibandfähigen Ausgestaltung dargestellt. In dem dargestellten Beispiel ermöglicht die Schaltungsanordnung das Kompensieren der Dämpfung für den Betrieb in drei unterschiedlichen Frequenzbändem. Die Schaltungsanordnung verfügt über einen geräteseitigen Anschluss 22 und einen Antennenanschluss 23. Die Zuführung des Signals zu dem für das jeweilige Frequenzband ausgelegten Schaltungsteil A, B oder C erfolgt durch die geräteund antennenseitig vorhandenen Frequenzbandweichen 19, 20, so genannte Diplexer. Die Schaltungsteile B und C sind für den Betrieb in unterschiedlichen Frequenzbändern, jedoch mit innerhalb dieser Frequenzbänder eindeutig festliegenden Frequenzbereichen, für das Senden und Empfangen (beispielsweise GSM 900 und GSM 1.800) ausgelegt. Hingegen ist das Schaltungsteil A in der dem erfinderischen Prinzip folgenden Weise ausgelegt. Bei diesem Schaltungsteil A sind sowohl der Leistungsverstärker 2 (PA - Power Amplifier) als auch der Empfangsverstärker 4 (LNA Low Noise Amplifier) so breitbandig ausgelegt, dass innerhalb des für diesen Schaltungsteil A zur Verarbeitung vorgesehenen Frequenzbandes sowohl Sendesignale in einem gegenüber den Empfangssignalen höheren Frequenzbereich a, b als auch Sendesignale in einem im Verhältnis zu den Empfangssignalen niedrigeren Frequenzbereich b, a von dem in der Figur nicht dargestellten, am Anschluss 22 angeschlossenen Mobilfunkgerät zur Antenne 24 übertragen werden können. Die Funktionsweise dieses Schaltungsteils A soll im folgenden erläutert werden. Innerhalb eines Frequenzbandes sind zwei voneinander verschiedene Frequenzbereiche a (mit beispielsweise 1.900 bis 1.980 MHz) und b (mit beispielsweise 2.010 bis 2.170 MHz) für das Senden und Empfangen vorgesehen. Wahlweise kann ein an der Antenne 24 eingehendes HF-Signal Frequenzen innerhalb des höheren oder des niedrigeren in dem Frequenzband zugelassenen Frequenzbereichs a, b aufweisen. Ein solches Signal wird zunächst über den Antennenanschluss 23 und den Diplexer 20 dem Schaltungsteil A zugeführt. Dieser befindet sich in einer Grundstellung, bei der unabhängig davon, ob es sich bei dem empfangenden Signal um ein Signal im Frequenzbereich a oder b handelt, dieses eingehende Signal auf Grund eines entsprechenden Schaltungszustandes der Filter- und Umschalteinheiten 5, 6 über den Empfangsverstärker 4 und den anderen Diplexer 19 sowie den Anschluss 22 dem nicht gezeigten Mobilfunkgerät zugeführt wird. Das selbstverständlich für den Betrieb in dem entsprechenden Netzstandard geeignete Mobilfunkgerät erkennt, ob das empfangene Signal Frequenzen innerhalb des Frequenzbereichs a, im Bespiel 1.900 bis 1.980 MHz oder b, gemäß Beispiel 2.010 bis 2.170 MHz, aufweist. Dementsprechend wird ein auszusendendes Signal mit einer dem jeweils anderen Frequenzbereich entsprechenden Frequenz von dem Mobilfunkgerät erzeugt. Weist das empfange Signal also beispielsweise eine Frequenz zwischen 2.010 bis 2.170 MHz auf, so sendet das Mobilfunkgerät im Rahmen der bestehenden Verbindung im Frequenzbereich von 1.900 und 1.980 MHz.
Sobald die Detektions- und Steuereinheit 11 ein solches, vom an die Schaltungseinheit angeschlossenen Mobilfunkgerät kommendes Sendesignal zwischen 1.900 und 1.980 MHz feststellt, steuert sie die Filter- und Umschalteinheiten (5, 6) über die Steuerverbindungen 12, 13 so an, dass Signale innerhalb dieses Frequenzbereichs a oder b stets über den Signalzweig 1 mit dem Leistungsverstärker 2 geführt werden. Die Ausgestaltung der Filter- und Umschalteinheiten 5, 6 wird in den nachfolgenden Figuren noch näher erläutert. Entsprechend einer vorteilhaften Ausgestaltungsform besteht bei der in der Fig. 1 dargestellten Schaltungsanordnung außerdem eine Steuerverbindung 14 zwischen der Detektions- und Steuereinheit 11 sowie dem Leistungsverstärker 2. Über diese Steuerverbindung 14 wird zum Zweck der Verminderung des Energieverbrauchs der gesamten Schaltungseinheit der Leistungsverstärker 2 nur dann aktiviert, wenn durch die Detektions- und Steuereinheit 11 das Vorhandensein eines über den Schaltungsteil A zu übertragenden Sendesignals festgestellt wird. Anderenfalls ist der Leistungsverstärker 2 inaktiv.
Durch die Fig. 2 wird die Ausbildung der Filter- und Steuereinheiten 5, 6 näher verdeutlicht. Wie in der Figur ersichtlich ist, handelt es sich bei diesen Einheiten jeweils um eine Kombination einer Frequenzweiche 7, 9 mit einem Signalumschalter 8, 10 für das an den jeweiligen Betriebsmodus angepasste Umschalten des Signalweges. Durch die Frequenzweiche 7 wird das vom Mobilfunkgerät kommende Sendesignal dem Frequenzzweig für den Frequenzbereich a oder b zugeführt. Die Detektions- und Steuereinheit 11, welche die Zugehörigkeit des Sendesignals zum Frequenzbereich a oder b des vom Schaltungsteil A verarbeiteten Frequenzbandes erkennt, schalten die Signalumschalter 8, 10 mittels der zu ihnen bestehenden Steuerverbindungen 12, 13 so, dass das Sendesignal über den Signalzweig 1 mit dem Leistungsverstärker 2 und den Antennenanschluss 23 der Antenne 24 geführt wird. Nur wenn die Detektions- und Steuereinheit 11 ein entsprechendes Sendesignal erkennt, wird auch der Leistungsverstärker 2 aktiv geschaltet. Bei Ausbleiben des Sendesignals wird der Sendeverstärker 2 deaktiviert und die Signalumschalter 8, 10 werden durch die Detektions- und Steuereinheit 11 in einen Grundzustand geschaltet. Dieser Grundzustand ist in der Fig. 3, welche Einzelheiten der Signalumschalter 8, 10 nochmals verdeutlicht, dargestellt. Bei Bestehen des Grundzustandes wird ein dem Frequenzband des Schaltungsteils A entsprechendes Empfangssignal, unabhängig davon, ob es eine Frequenz im Frequenzbereich a oder b aufweist, über den Signalzweig 3 auf den Empfangsverstärker 4 geführt und von dort über den Signalumschalter 8, die Frequenzweiche (Duplexer) 7, den Diplexer 19 und den Anschluss 22 an das nicht dargestellte Mobilfunkgerät weitergeleitet. Ein Sendebetrieb ist in diesem Schaltzustand nicht möglich. Dieser wird erst ermöglicht, wenn durch die Detektions- und Steuereinheit 11 ein entsprechendes vom Mobilfunkgerät abgegebenes Sendesignal detektiert wird. Erst dann wird einerseits der Leistungsverstärker 2 aktiviert und andererseits durch eine entsprechende Ansteuerung der Signalumschalter 8, 10 der über den Sendeverstärker 2 führende Signalzweig 1 durchgeschaltet.

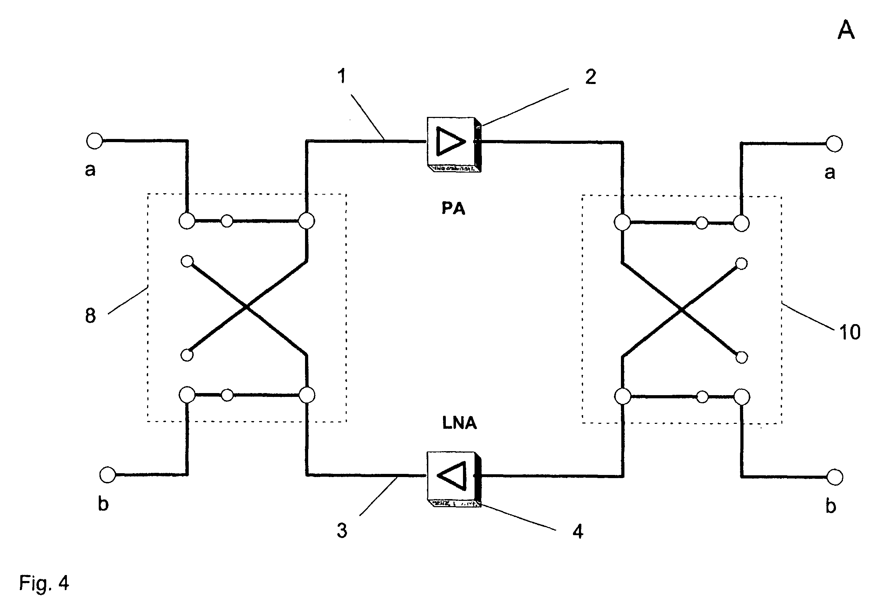

In der Fig. 4 weisen die Signalumschalter 8, 10 nach entsprechender Ansteuerung durch die Detektions- und Steuereinheit 11 einen Schaltzustand auf, bei dem ein im Frequenzbereich a (also gemäß Beispiel zwischen 1.900 und 1.980 MHz) liegendes Sendesignal über den Sendeverstärker 2 geführt wird. Sofern die Schaltung im Continuous-Wave-Verfahren betrieben wird, also eine echte Duplex-Verbindung mit gleichzeitigem Senden und Empfangen besteht, wird gleichzeitig ausschließlich das dem Frequenzbereich b (2.010 bis _2.170 MHz) zuzuordnende Empfangssignal über den Empfangsverstärker 4 geführt. Sobald von der Detektions- und Steuereinheit 11 kein Sendesignal mehr erkannt wird, nimmt der Schaltungsteil A wieder den Grundzustand gemäß Fig. 3 ein.

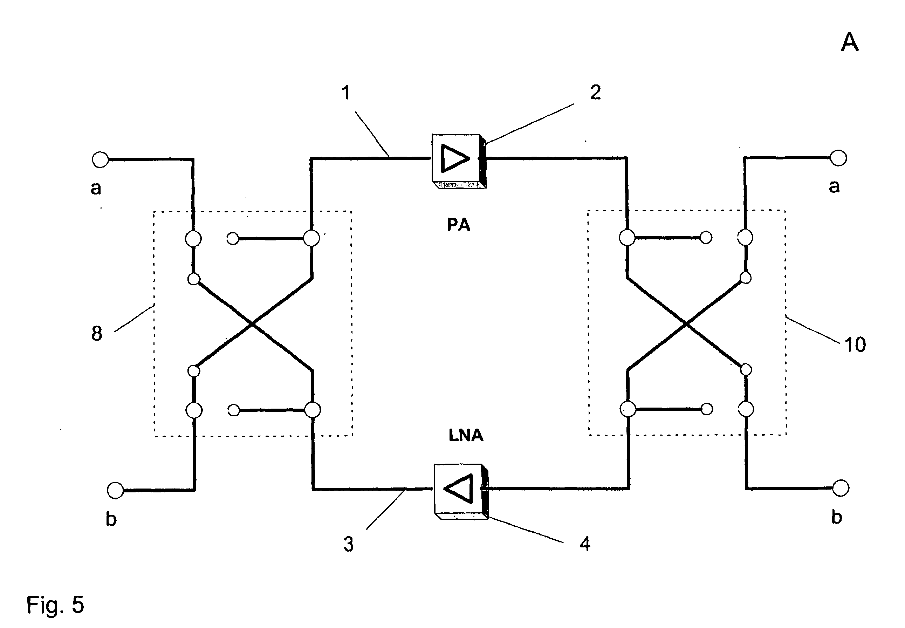

Die Fig. 5 zeigt den Schaltungsteil A nochmals in einem Schaltzustand mit vorhandenem Sendesignal. Allerdings wurde hier durch die Detektions- und Steuereinheit 11 festgestellt, dass das Sendesignal Frequenzen im Frequenzbereich b (2.010 bis 2.170 MHz) aufweist. Folglich wurden hier über die Steuerverbindung die Signalumschalter so geschaltet, dass Signale des Frequenzbereichs b über den Sendeverstärker geführt werden, während empfangene Signale des Frequenzbereichs a (1.900 und 1.980 MHz) von der Antenne über den Empfangsverstärker zum Mobilfunkgerät geführt werden.

### Liste der verwendeten Bezugszeichen

- 1: Signalzweig (Sendezweig)
- 2: Leistungs- bzw. Sendeverstärker
- 3: Empfangsverstärker
- 4: Signalzweig (Empfangszweig)
- 5: Filter- und Umschalteinheit
- 6: Filter- und Umschalteinheit
- 7: Frequenzweiche (Duplexer)
- 8: Signalumschalter
- 9: Frequenzweiche (Duplexer)
- 10: Signalumschalter
- 11: Detektions- und Steuereinheit
- 12: Steuerverbindung
- 13: Steuerverbindung
- 14: Steuerverbindung
- 15: Sendezweig
- 16: Empfangszweig
- 17: Sendezweig
- 18: Empfangszweig
- 19: Frequenzbandweiche (Diplexer)
- 20: Frequenzbandweiche (Diplexer)
- 21, 21': Antennenzuleitungskabel
- 22: (geräteseitiger) Anschluss
- 23: Antennenanschluss
- 24: Antenne

- A: Schaltungsteil
- B, C: Schaltungsteil

- a, b: Frequenzbereich

## Patentansprüche

1. Schaltungsanordnung zum Kompensieren der Dämpfung in einem Antennenzuleitungskabel (21, 21') für ein Mobilfunkgerät, welche zumindest einen Schaltungsteil (A) aufweist, der für den Betrieb in einem ersten Frequenzband mit zwei für das Senden und Empfangen stets unterschiedlichen Frequenzbereichen (a, b) von HF-Signalen geeignet ist und hierfür zumindest einen zum Verstärken von auszusendenden HF-Signalen ausgebildeten Signalzweig (1) mit einem breitbandig ausgelegten Leistungsverstärker (2), einen zum Verstärken von empfangenen HF-Signalen ausgebildeten Signalzweig (3) mit einem breitbandig ausgelegten Empfangsverstärker (4), zwei eingangs- und ausgangsseitig der beiden Signalzweige (1, 3) angeordnete Filter- und Umschalteinheiten (5, 6) mit je einer Frequenzweiche (7, 9) und einem Signalumschalter (8, 10) sowie eine die Signalumschalter (8, 10) ansteuernde Detektions- und Steuereinheit (11) umfasst, wobei entsprechend verschiedener von dem Mobilfunkgerät vorgegebener und ausgehend von einem, nur das Empfangen, nicht jedoch das Senden von HF-Signalen ermöglichenden Grundzustand vom Schaltungsteil (A) der Schaltungsanordnung automatisch eingenommener möglicher Betriebszustände das Senden der HF-Signale wahlweise entweder in dem höheren oder dem niedrigeren der beiden in dem vom Schaltungsteil (A) verarbeiteten Frequenzband gelegenen Frequenzbereiche (a, b) ermöglicht ist, indem im Grundzustand des Schaltungsteils (A) über diesen empfangene HF-Signale unabhängig von ihrer Zugehörigkeit zum Frequenzbereich (a, b) innerhalb des vom Schaltungsteil (A) verarbeiteten Frequenzbandes über den Signalzweig (3) mit dem Empfangsverstärker (4) geführt und veranlasst durch das Mobilfunkgerät und ein von ihm ausgesendetes HF-Signal mittels der das Vorhandensein des Sendesignals feststellenden Detektions- und Steuereinheit (11) die Signalumschalter (8, 10) über Steuerverbindungen (12, 13) so angesteuert werden, dass HF-Signale mit einer Frequenz ausschließlich innerhalb des im Rahmen der aktuell aufgebauten Telekommunikationsverbindung für das Senden verwendeten Frequenzbereiches (a, b) über den Leistungsverstärker (2) des Schaltungsteils (A) geführt werden.

2. Schaltungsanordnung nach Anspruch 1, **dadurch gekennzeichnet, dass** die Detektions- und Steuereinheit (11) die Signalumschalter (8, 10) unmittelbar mit dem Ausbleiben eines Sendesignals vom Mobilfunkgerät in den dem Grundzustand des Schaltungsteils (A) entsprechenden Schaltzustand zurückgeschaltet.

3. Schaltungsanordnung nach Anspruch 1 oder 2, **dadurch gekennzeichnet, dass** eine weitere Steuerverbindung (14) von der Detektions- und Steuereinheit (11) zum Leistungsverstärker (2) besteht und diese den Leistungsverstärker (2) so steuert, dass er nur beim Vorhandensein eines Sendesignals aktiv geschaltet ist.

4. Schaltungsanordnung nach Anspruch 3, **dadurch gekennzeichnet, dass** die Verstärkung des Leistungsverstärkers (2) durch die Detektions- und Steuereinheit (11) in Abhängigkeit des bei der aktueli bestehenden Telekommunikationsverbindung für das Senden verwendeten Frequenzbereiches (a, b) unterschiedlich eingestellt wird.

5. Schaltungsanordnung nach einem der Ansprüche 1 bis 4, **dadurch gekennzeichnet, dass** die Schaltungsanordnung für einen Dual- oder Multibandbetrieb neben dem Schaltungsteil (A) weitere Schaltungsteile (B, C) zur Verarbeitung von Funksignalen anderer Frequenzbänder mit jeweils einem Sendezweig (15, 17) und Empfangszweig (16, 18) aufweist, wobei die den einzelnen Frequenzbändern zugeordneten Schaltungsteile (A, B, C) gegebenenfalls durch als Diplexer ausgebildete Frequenzbandweichen (19, 20) HF-mäßig voneinander getrennt sind.

## Claims

1. Circuit arrangement for compensation of the attenuation in an antenna feed cable (21, 21') for a mobile radio unit, said circuit arrangement comprises:
at least one circuit section (A) which is suitable for operation in an initial frequency band with two permanently different frequency ranges (a, b) of HF signals for transmission and reception, which has for this at least one signal branch (1) constructed for the amplification of transmittable HF signals with a power amplifier (2) designed for broadband, one signal branch (3) constructed for the amplification of received HF signals with a reception amplifier (4) designed for broadband;
two filter and switching units (5, 6) arranged on the input and output side of the two signal branches (1, 3) with one frequency switch (7, 9) and one signal switch (8, 10) each;
as well as a detection and control unit (11) that controlling the signal switches;
whereby according to various automatically assumed possible operating states determined by the mobile radio unit and emanating from an initial state of circuit section (A) of the circuit arrangement that allows only the reception but not the transmission of HF signals, transmission of the HF signals is made possible either in the higher or the lower of the two frequency ranges (a, b) located in the frequency band processed by circuit section (A) in that in the initial state of circuit section (A) the HF signals received by circuit section (A) - irrespective of their allocation to the frequency range (a, b) within the frequency band processed by circuit section (A) - passed via the signal branch (3) with the reception amplifier (4) and in that induced by the mobile radio unit and an HF signal transmitted by the mobile radio unit by means of the detection and control unit (11) determining the presence of the transmission signal the signal switches (8, 10) are driven by control connections (12, 13) in such a way that HF signals, that have a frequency that is exclusively within the frequency range (a, b) used for transmission within the framework of the currently established telecommunication connection, are passed through the power amplifier (2) of circuit section (A).

2. Circuit arrangement according to claim 1, **characterized in that** in the absence of a transmission signal from the mobile radio unit the detection and control unit (11) switches the signal switches (8, 10) immediately back to the switching status that corresponds to the initial state of circuit section (A).

3. Circuit arrangement according to claim 1 or 2, **characterized in that** a further control connection (14) exists from the detection and control unit (11) to the power amplifier (2) and that the detection and control unit (11) controls the power amplifier (2) in such a way that the power amplifier (2) is actively connected only in the presence of a transmission signal.

4. Circuit arrangement according to claim 3, **characterized in that** the amplification of the power amplifier (2) is adjusted to various levels by the detection and control unit (11), depending on the frequency range (a, b) used for transmission for the currently established telecommunication connection.

5. Circuit arrangement according to one of claims 1 to 4, **characterized in that** the circuit arrangement for dual or multiband operation has further circuit sections (B, C) for processing radio signals of other frequency bands with one transmission branch (15, 17) and one reception branch (16, 18) each in addition to the circuit section (A), whereby the circuit sections (A, B, C) allocated to the individual frequency bands display HF separation from one another if necessary by means of frequency band switches (19, 20) constructed in the form of diplexers.

## Revendications

1. Circuit pour la compensation de l'affaiblissement dans un câble d'amenée d'antenne (21, 21') pour un téléphone mobile, présentant au moins une partie de circuit (A) adaptée à l'exploitation dans une première bande de fréquences avec deux zones de fréquences (a, b) toujours différentes pour l'émission et la réception de signaux HF, et comprenant à cet effet au moins une branche de signal (1) formée pour l'amplification de signaux HF à émettre, avec un amplificateur de puissance (2) à large bande, une branche de signal (3) formée pour l'amplification des signaux HF reçus, avec un amplificateur de réception (4) à large bande, deux unités de filtre et de commutation (5, 6) disposées côté entrée et côté sortie des deux branches de signal (1, 3), avec chacune un filtre d'aiguillage (7, 9) et un commutateur de signal (8, 10), ainsi qu'une unité de détection et de commande (11) commandant les commutateurs de signal (8, 10), où, en fonction de différents états de service possibles automatiquement réglés, prescrits par le téléphone mobile, et à partir d'un état initial de la partie (A) du circuit permettant la réception seule, mais non l'émission de signaux HF, l'émission des signaux HF est permise au choix dans la zone supérieure ou dans la zone inférieure des deux zones de fréquences (a, b) reléguées dans la bande de fréquences traitée par la partie de circuit (A), en ce que dans l'état initial de la partie de circuit (A) les signaux HF reçus par celle-ci sont conduits indépendamment de leur appartenance à la zone de fréquences (a, b) à l'intérieur de la bande de fréquences traitée par la partie de circuit (A) par la branche de signal (3) avec l'amplificateur de réception (4), et que du fait du téléphone mobile et d'un signal HF émis par celui-ci au moyen de l'unité de détection et de commande (11) constatant la présence du signal d'émission, les commutateurs de signaux (8, 10) sont commandés par des connexions de commande (12, 13) de telle manière que des signaux HF sont conduits avec une fréquence exclusivement utilisée pour l'émission à l'intérieur de la zone de fréquences (a, b) dans le cadre de la liaison de télécommunication en cours via l'amplificateur de puissance (2) de la partie de circuit (A).

2. Circuit selon la revendication 1, **caractérisé en ce que** l'unité de détection et de commande (11) rétrograde les commutateurs de signaux (8, 10) dans l'état de commutation correspondant à l'état initial de la partie de circuit (A) dès le défaut d'un signal d'émission du téléphone mobile.

3. Circuit selon la revendication 1 ou 2, **caractérisé en ce qu'**une autre connexion de commande (14) existe de l'unité de détection et de commande (11) vers l'amplificateur de puissance (2) et que celle-ci commande l'amplificateur de puissance (2) de telle manière que celui-ci ne soit activé qu'en présence d'un signal d'émission.

4. Circuit selon la revendication 3, **caractérisé en ce que** l'amplification de l'amplificateur de puissance (2) est réglée différemment par l'unité de détection et de commande (11) en fonction de la zone de fréquences (a, b) utilisée pour l'émission lors de la liaison de télécommunication en cours.

5. Circuit selon l'une des revendications 1 à 4, **caractérisé en ce que** le circuit pour un mode dual ou multibandes présente en plus de la partie de circuit (A) d'autres parties de circuit (B, C) pour le traitement de signaux radios d'autres bandes de fréquence avec chacune une branche d'émission (15, 17) et une branche de réception (16, 18), les parties de circuit (A, B, C) affectées aux différentes bandes de fréquences étant éventuellement séparées entre elles quant à leurs HF par des filtres d'aiguillage (19, 20) formés en tant que displexeurs.
